# EUROPEAN PATENT APPLICATION

(11) **EP 1 936 728 A1**
(43) Date of publication of application: **25.06.2008**
(21) Application number: 07024264.9
(22) Date of filing: 13.12.2007
(51) Int. Cl.: H01M 8/12, H01M 8/06, H01M 8/04

(54) **Cell structure of direct-flame fuel cell**

(30) Priority: 14.12.2006 JP 2006337275
(71) Applicant: SHINKO ELECTRIC INDUSTRIES CO., LTD., Nagano-shi, Nagano 381-2287 (JP)
(72) Inventor: Yoshiike, Jun, Nagano-shi Nagano 381-2287 (JP); Suganuma, Shigeaki, Nagano-shi Nagano 381-2287 (JP); Katagiri, Fumimasa, Nagano-shi Nagano 381-2287 (JP); Tokutake, Yasue, Nagano-shi Nagano 381-2287 (JP)
(74) Representative: Zimmermann, Gerd Heinrich

(57) **Abstract**

A cell of a solid electrolyte direct-flame fuel cell generates power in a state that the cell is placed inside or in the vicinity of a flame (16). The cell is configured in such a manner that a cathode layer (14) is formed on one surface of a solid electrolyte layer (10) and an anode layer (12) is formed on the other surface. The cell is characterized by being curved so that the anode layer side has a concave shape and the cathode layer side has a convex shape.

## Description

The present invention relates to a cell structure of a direct-flame fuel cell. In particular, the invention relates to a cell structure of a direct-flame fuel cell which generates power by placing the cell of a solid electrolyte fuel cell inside or in the vicinity of a flame and thereby keeping the temperature of the cell at its operating temperature utilizing the heat of the flame.

Fuel cells have been developed and put in practical use as low-pollution power generating means to replace thermal power generation etc. and electric energy sources of electric cars to replace engines that use gasoline etc. as fuels. And many studies have been made to increase the efficiency and reduce the cost of fuel cells.

Fuel cells employ various kinds of power generation methods, and fuel cells which use a solid electrolyte are known as one type. Among the fuel cells using a solid electrolyte is one which uses, as an oxygen ion conduction type solid electrolyte, a sintered body made of yttria-stabilized zirconia. A cathode layer is formed on one surface of the solid electrolyte layer and an anode layer is formed on the other surface. Oxygen or an oxygen-containing gas is supplied to the cathode layer side and a flame formed by a fuel gas such as methane is directly applied to the anode layer.

Conventionally, this type of direct-flame fuel cell has a cell in which an anode layer is formed on one surface of an entirely-flat-plate-like or thin-film-like solid electrolyte layer and a cathode layer is formed on the other surface and which thus serves as a power generation body made of the anode layer, the electrolyte layer, and the cathode layer.

Prior art references of the fuel cell in which, as described above, the anode layer is formed on one surface of the flat-plate-like solid electrolyte layer and the cathode layer is formed on the other surface are as follows.

Patent document JP-A-2004-139936 discloses a solid oxide fuel cell which generates power in such a manner that the cell is placed inside or in the vicinity of a flame. A porous solid electrolyte layer is formed to attain high durability by preventing damage such as cracks from occurring in the solid electrolyte due to a rapid temperature variation.

Patent document JP-A-2005-353571 discloses a fuel cell not having a closed structure in which plural cells are formed on a single, plate-like solid electrolyte substrate. To reduce the size and the cost and to increase the durability and the power generation efficiency, plural anode layers are formed on one surface of the flat-plate-like solid electrolyte substrate and plural cathode layers are formed on the other surface so as to be opposed to the respective anode layers. The plural cells are formed by the anode layers and the cathode layers that are opposed to each other with the solid electrolyte substrate interposed in between. The anode layers and the cathode layers are connected in series.

Patent document JP-A-2006-190592 discloses a solid oxide fuel cell. To increase the durability, the heat shock resistance, and the volume power generation density at the same time, to reduce the size, weight, and cost of the fuel cell, and to increase the productivity of the fuel cell, a cell is provided which includes an anode layer including a conductive mesh and an anode forming material carried by the mesh, a cathode layer including a conductive mesh and a cathode forming material carried by the mesh, and a thin-film-like solid electrolyte layer supported by those layers.

As described above and as shown in Fig. 1, each of the above-described fuel cells disclosed in Patent documents JP-A-2004-139936, JP-A-2005-353571, and JP-A-2006-190592 is configured in such a manner that an anode layer 12 is formed on one surface of a flat-plate-like solid electrolyte layer 10 and a cathode layer 14 is formed on the other surface. Electrodes 13 and 15 are connected to the anode layer 12 and the cathode layer 14, respectively. Oxygen or an oxygen-containing gas is supplied to the cathode layer 14 side and a flame 16 formed by a fuel gas such as methane is applied directly to the anode layer 12.

However, in the entirely flat cell having the flat-plate-like solid electrolyte layer 10, when a flame 16 is applied to the anode-layer-12-side surface, the flame 16 tends to go around from the anode layer 12 side to the cathode layer 14 side as indicated by arrows A. The flame 16 going around to the cathode layer 14 side raises a problem that the power generation efficiency may be lowered due to reduction in oxygen partial pressure on the cathode layer 14 side.

As described above, the cell of the conventional direct-flame fuel cell in which the anode layer and the cathode layer are formed on the entirely flat solid electrolyte layer is associated with the problem that when a flame is applied to the anode layer of the cell, the flame goes around to the cathode layer side and thereby causes reduction in oxygen partial pressure and power generation efficiency.

In light of the above, a solid electrolyte direct-flame fuel cell according to independent claim 1, an a method for manufacturing a direct-flame fuel cell according to independent claim 3 are provided.
Further advantages, features, aspects and details are evident from the dependent claims, the description and the drawings.

An obj ect of the present invention is therefore to provide, in the cell of a direct-flame fuel cell which uses a solid electrolyte, a structure that prevents a flame from going around to the cathode layer side and thereby prevents reduction in power generation efficiency due to reduction in oxygen partial pressure on the cathode layer side.

To attain the above object, according to the invention, there is provided with a solid electrolyte direct-flame fuel cell for generating power in a state being placed inside or in the vicinity of a flame,
the solid electrolyte direct-flame fuel cell including:
an anode layer formed on one surface of a solid electrolyte layer, and
a cathode layer formed on the other surface, wherein
the solid electrolyte direct-flame fuel cell is curved so that the anode layer to which the flame is applied has a concave shape and the cathode layer has a convex shape. Since the cell is curved in the above manner and a flame is applied to the anode layer side having a concave surface, the flame is prevented from going around to the cathode layer side having a convex shape. As a result, the oxygen partial pressure on the cathode layer side is prevented from decreasing and the reaction portion of the cell that is produced by the flame can be enlarged. The power generation efficiency can thus be increased.

Further, there is provided with the solid electrolyte direct-flame fuel cell, which is curved so as to have a conical shape, a pyramid shape, a bowl shape, or a roof shape. Where a flame is applied to the anode side having a concave shape, the shape of the cell can be selected as appropriate from a conical shape, a pyramid shape, a bowl shape, a roof shape, etc. as an optimum shape, that is, as a curved shape capable of realizing highest power generation efficiency, taking into consideration the size, kind, shape, etc. of the flame.

In the case of a conical cell, the possible angular range θ between the slant surface and the horizontal surface is 5° to 30°, most preferably 15°.

Further, there is provided with a method for manufacturing a direct-flame fuel cell, including the steps of:
working a green sheet of a solid electrolyte into a curved shape in which one surface is a concave surface and the other surface is a convex surface;
firing the green sheet; and
forming an anode layer on the concave surface of the fired solid electrolyte and a cathode layer on the convex surface thereof. The invention makes it possible to manufacture a cell of a direct-flame fuel cell by an easy and low-cost method by shaping a green sheet of a solid electrolyte into a curved shape in the above manner.

Further, there is provided with the method for manufacturing a direct-flame fuel cell, wherein
a circular green sheet of the solid electrolyte is worked into a conical shape in which an apex is located at the center, one surface is a concave surface, and the other surface is a convex surface. This makes it possible to manufacture a cell of a direct-flame fuel cell by an easy and low-cost method by working a circular green sheet of a solid electrolyte into a circular shape, shaping it into a conical shape, and firing the thus-shaped green sheet utilizing a conventional manufacturing process of a flat, circular cell as it is.

With the above configurations and methods, a cell of a direct-flame fuel cell can be realized in which a flame is prevented from going around to the cathode side or the degree in which a flame goes around to the cathode side is low and which is hence high in power generation efficiency.
Embodiments are also directed to apparatuses manufactured by disclosed methods and including apparatus parts corresponding to described method steps. Furthermore, embodiments are also directed to methods by which the described apparatus is manufactured. It may include method steps for manufacturing parts of the apparatus. The method steps may be performed by way of hardware components, firmware, software, a computer programmed by appropriate software, by any combination thereof or in any other manner.

So that the manner in which the above recited features of the present invention can be understood in detail, a more particular description of the invention, briefly summarized above, maybe had by reference to embodiments. The accompanying drawings relate to embodiments of the invention and are described in the following:
Fig. 1 is a sectional view showing the configuration of a cell of a conventional direct-flame fuel cell.
Fig. 2 is a sectional view showing the configuration of a cell of a direct-flame fuel cell according to the present invention.
Figs. 3A and 3B illustrate a manufacturing method of the cell of the direct-flame fuel cell according to the invention.
Figs. 4A to 4D show various shapes of cells according to the invention.
Fig. 5 shows the angle of a conical cell.
Fig. 6 shows results of experiments that are conducted to compare a cell according to the invention with a conventional cell.

An embodiment of the present invention will be hereinafter described in detail with reference to the accompanying drawings.

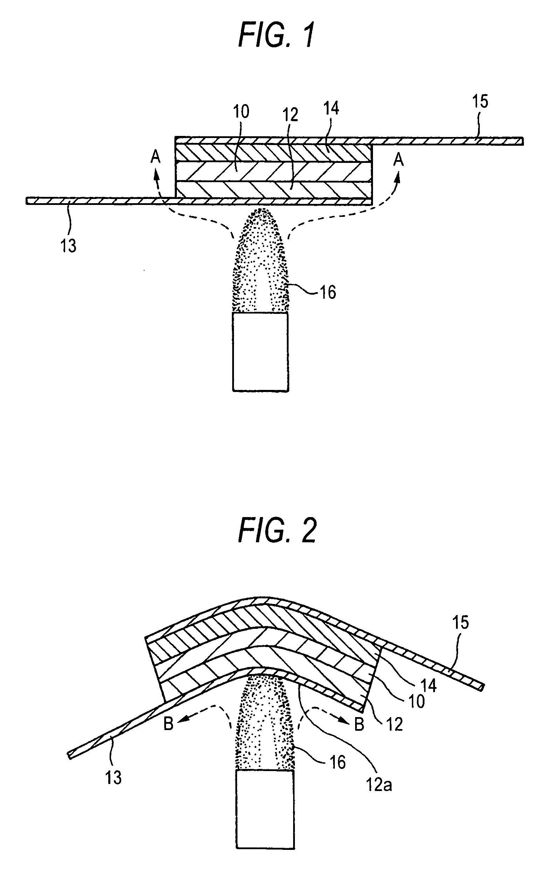

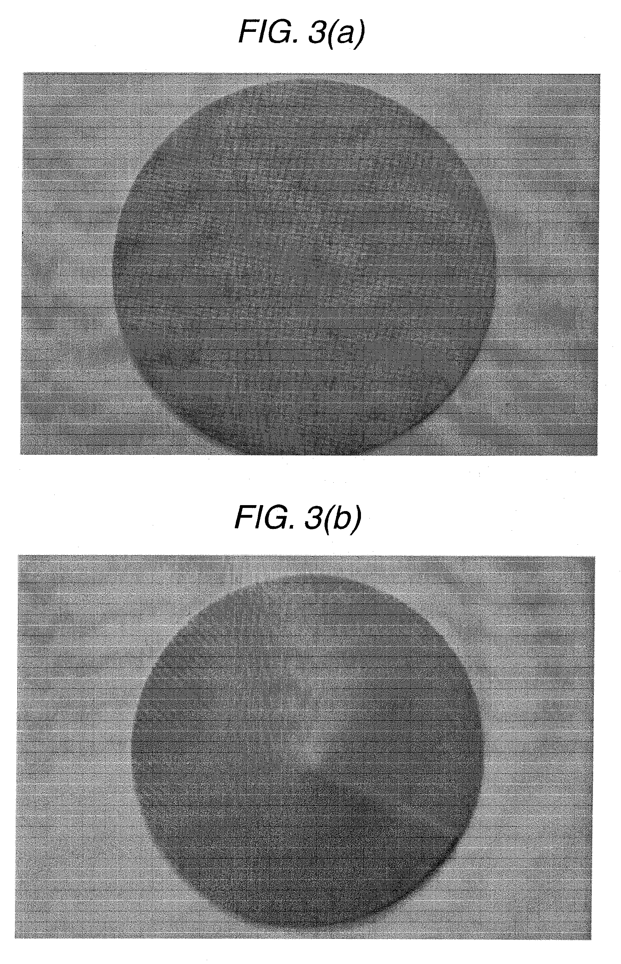

Fig. 2 is for description of the configuration of a cell of a direct-flame fuel cell according to a first embodiment of the invention as well as its manufacturing method. Figs. 3A and 3B show shapes of a green sheet of a solid electrolyte before firing which is used to manufacture a cell.

As shown in Fig. 2, the configuration of the cell of the direct-flame fuel cell according to the invention is the same as the conventional cell in that an anode layer 12 is formed on one surface of a solid electrolyte layer 10 and a cathode layer 14 is formed on the other surface and electrodes 13 and 15 are connected to the anode layer 12 and the cathode layer 14, respectively. However, in the invention, the cell is curved so that the anode layer 12 side assumes a concave shape and the cathode layer 14 side assumes a convex shape. Oxygen or an oxygen-containing gas is supplied to the cathode layer 14 side and a flame 16 formed by a fuel gas such as methane is applied directly to the anode layer 12 side.

As described above, in the invention, the cell is curved and a flame 16 is applied to the anode layer 12 side having a concave surface. Since the flame 16 is curved along the concave surface 12a at an acute angle (smaller than 90°) as indicated by arrows B, the flame 16 is prevented from going around to the cathode layer 14 side having a convex shape or the amount of flame that goes around to the cathode layer 14 side is reduced. As a result, the oxygen partial pressure on the cathode layer 14 side is prevented from decreasing and the reaction portion of the cell that is produced by the flame 16 can be enlarged substantially. The power generation efficiency can thus be increased.

The cell, having the above shape, of the fuel cell is manufactured in the following manner. First, as in the conventional manufacturing method of a cell, as shown in Fig. 3A, a green sheet 10a of a solid electrolyte layer is formed so as to have a circular thin-plate or thin-film shape.

In the invention, no particular limitations are imposed on the material of the solid electrolyte layer. However, the solid electrolyte layer may be made of zirconia-based ceramics such as YSZ (yttria-stabilized zirconia), ScSZ (scandia-stabilized zirconia), or YSZ or ScSZ doped with Ce, Al, or the like, ceria-based ceramics such as SDC (samaria-doped ceria) or GDC (gadolia-doped ceria), LSGM (lanthangallate), or bismuth-oxide-based ceramics.

Next, as shown in Fig. 3B, the green sheet 10a of the solid electrolyte layer is worked into a conical shape. The circular, flat-plate-like green sheet 10a of the solid electrolyte layer is worked into a conical green sheet 10b by simple methods. For example, the circular green sheet 10a is cut straightly from the center in a radial direction, applying ethanol or the like to portions on both sides of the cutting line by such an amount that those portions become soft, laying those portions on each other, and shaping the green sheet 10a into a conical shape using a proper die or the like (not shown).

Such simple working methods can be applied to not only SDC-type solid electrolyte layers but also YSZ-type and GDC-type ones.

In the manufacturing method of a cell shown in Figs. 3A and 3B, first a green sheet of a solid electrolyte is worked into a circular shape and then it is shaped into a conical shape and fired. Therefore, the cell of the direct-flame fuel cell according to the invention can be manufactured easily at a low cost by merely adding the step of working a circular, flat-plate-like green sheet of a solid electrolyte into a conical shape to the process for manufacturing a conventional circular, flat-plate-like cell of a fuel cell. Facilities for manufacturing a green sheet of a circular, flat-plate-like green sheet of a solid electrolyte, facilities for firing a green sheet, and other facilities can be used as they are.
An anode layer, a cathode layer and an electrode are arranged as the conventional manner on the solid electrolyte layer obtained in this manner to complete a fuel cell.

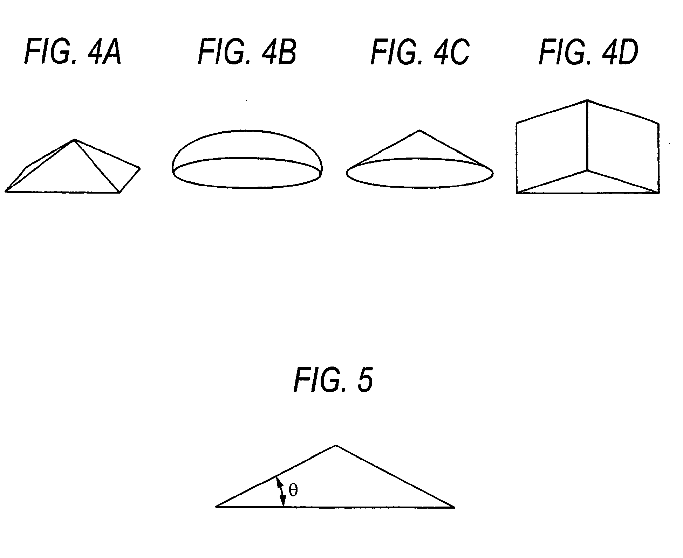

Figs. 4A to 4D show various possible shapes of the cell of the fuel cell according to the invention. The cell of the direct-flame fuel cell according to the invention may have various shapes as long as they are shaped in such a manner that one surface of the solid electrolyte layer has a concave surface and the other surface has a convex surface and so that a flame is prevented from going around to the cathode layer side when the flame is applied to the anode layer side. A pyramid shape (Fig. 4A), a bowl shape (Fig. 4B), a conical shape (Fig. 4C), a roof shape (Fig. 4D), and other shapes are possible. An optimum shape should be selected as appropriate taking into consideration various points such as the degree in which a flame is prevented from going around from the anode side to the cathode side, the degree in which the power generation efficiency is increased, and the possibility and easiness of working. For example, in the case of a conical cell, as shown in Fig. 5, the possible angular range θ between the slant surface and the horizontal surface is 5° to 30°, most preferably 15°.

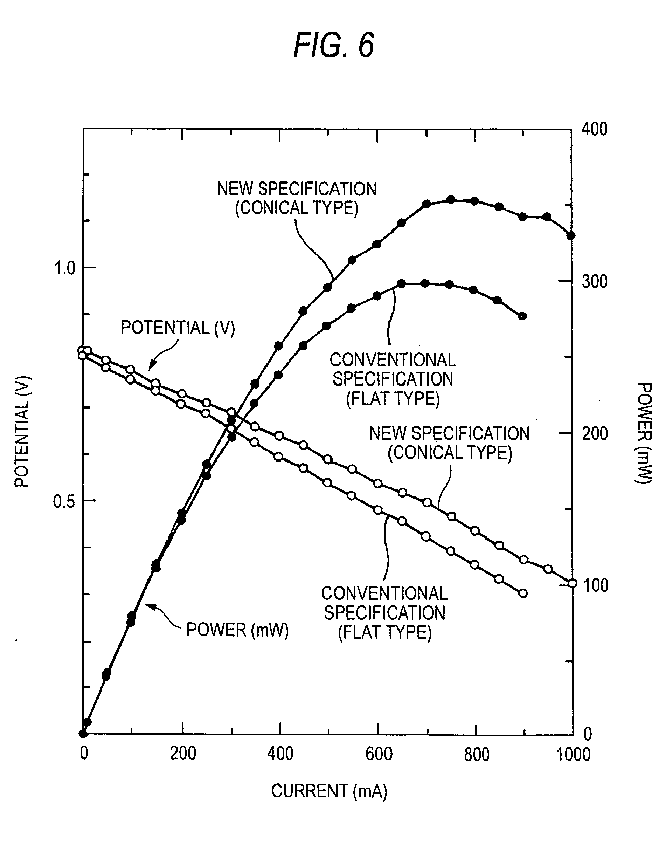

Fig. 6 shows results of experiments that are conducted to compare a cell of a conventional specification produced by forming a circular green sheet 10a of a solid electrolyte layer (see Fig. 3A) and firing it as it is and a cell according to the invention (new specification) produced by forming a conical green sheet 10b in which the angle θ is equal to about 15° (see Fig. 3B) .

The specifications of the fuel cells used in the experiments are as follows:
(1) Compositions of fuel cells (numerical values in brackets are percentages)
   Bottom layer of anode: Ni_{0.9}Co_{0.1} [40] /SDC [60]
   Top layer of anode: Ni_{0.9}Co_{0.1} [70] /SDC [30] + Rh₂O₃ (5 wt%)
   Bottom layer of cathode: SSC [50]/SDC [50]
   Top layer of cathode: SSC [70]/SDC [30] + PF (25 wt%)
   Solid electrolyte: SDC (Sm_{0.8}Ce_{0.2}O_{1.9})
(2) Shapes and dimensions of fuel cells
   Conventional specification: Circular, 15 mm in diameter; the electrodes are 13 mm in diameter.
   New specification: Conical, 14 mm in diameter (of the bottom surface); the electrodes are 13 mm in diameter.
   Notes: In the conventional specification, a cut-out circular electrolyte green sheet is fired as it is and used to form a fuel cell. In the new specification (invention), a cut-out circular electrolyte green sheet of the same size is worked into a conical shape, fired, and used to form a fuel cell.
(3) Fuel: C₄H₁₀ (n-butane) having a concentration of 6.5%
(4) Total flow rate: 400 sccm

As seen from Fig. 6, the power generation efficiency of the conical shape (invention) is higher than that of the flat, circular shape (conventional). This is considered due to the fact that, as described above, in the conical shape the degree in which a flame goes around to the cathode side is lowered and the oxygen partial pressure is prevented from decreasing on the cathode layer side.

Although the embodiment of the invention has been described above with reference to the accompanying drawings, the invention is not limited to the above embodiment and various modifications, changes, etc. are possible without departing from the spirit and scope of the invention.

As described above, the invention can provide a cell of a fuel cell in which a flame is prevented from going around to the cathode side or goes around to the cathode side only in a small degree and which is therefore high in power generation efficiency. As such, the invention is applicable under every set of conditions of use of direct-flame fuel cells.

## Claims

1. A solid electrolyte direct-flame fuel cell for generating power in a state being placed inside or in the vicinity of a flame (16),
the solid electrolyte direct-flame fuel cell comprising:
an anode layer (12) formed on one surface of a solid electrolyte layer (10), and
a cathode layer (14) formed on the other surface, wherein
the solid electrolyte direct-flame fuel cell is curved so that the anode layer to which the flame is applied has a concave shape and the cathode layer has a convex shape.

2. The solid electrolyte direct-flame fuel cell according to claim 1, which is curved so as to have a conical shape, a pyramid shape, a bowl shape, or a roof shape.

3. A method for manufacturing a direct-flame fuel cell, comprising the steps of:
working a green sheet (10a) of a solid electrolyte into a curved shape in which one surface is a concave surface and the other surface is a convex surface;
firing the green sheet; and
forming an anode layer (12) on the concave surface of the fired solid electrolyte and a cathode layer (14) on the convex surface thereof.

4. The method for manufacturing a direct-flame fuel cell according to claim 3, wherein
a circular green sheet of the solid electrolyte is worked into a conical shape in which an apex is located at the center, one surface is a concave surface, and the other surface is a convex surface.
